# EUROPEAN PATENT SPECIFICATION

(11) **EP 3 051 921 B1**
(45) Date of publication and mention of the grant of the patent: **06.09.2023**
(21) Application number: 14849310.9
(22) Date of filing: 24.04.2014
(51) Int. Cl.: H04W 8/18, H04W 12/06, H04M 1/725, H04M 1/72448, H04W 88/02, H04W 12/45, H04W 12/72

(54) **METHOD AND SYSTEM FOR AUTOMATICALLY SWITCHING USER MODES BY IDENTIFYING IMSI**
VERFAHREN UND SYSTEM ZUR AUTOMATISCHEN UMSCHALTUNG VON BENUTZERMODI DURCH IDENTIFIZIERUNG VON IMSI
PROCÉDÉ ET SYSTÈME PERMETTANT DE COMMUTER AUTOMATIQUEMENT DES MODES UTILISATEURS PAR UNE IDENTIFICATION D'IMSI

(30) Priority: 27.09.2013 CN 201310448160
(43) Date of publication of application: 03.08.2016
(73) Proprietor: Huizhou TCL Mobile Communication Co., Ltd., Huizhou, Guangdong 516006 (CN)
(72) Inventor: YANG, Yan, Huizhou Guangdong 516006 (CN)
(74) Representative: Murgitroyd & Company
(86) International application number: PCT/CN2014/076082
(87) International publication number: WO 2015/043172

(56) References cited:
- EP-A1- 1 601 216
- CN-A- 1 852 523
- CN-A- 101 287 193
- CN-A- 102 098 661
- CN-A- 103 476 149
- US-A1- 2010 009 668

## Description

### Technical Field and Background

The present invention relates to the field of mobile communication terminal technologies and in particular to a method and a storage medium for switching subscriber mode through identifying IMSI (International Mobile Subscriber Identification Number). Currently for a cell phone, it is the same mode to enter when any SIM (Subscriber Identity Module) card, e.g. GSM (Global System for Mobile Communications) 900/1800, that meets the network standard requirements is inserted and the cell phone is turned on. At the same time, different people have different selections and requirements for the cell phone mode. In some cases, different SIM cards would be inserted into the same cell phone for the use by different subscribers when the cell phone still has only one default subscriber mode. As a result, some subscribers cannot use the mode that they like or are used to. Alternatively, for a dual-card dual-standby cell phone with two SIM cards inserted, the subscriber sometimes has different needs for the two cards with one card probably focusing on entertainment functions and the other SIM card specifically configured for kids that shuts down the entertainment functions and only has the communication functions so as to prevent them from spending too much time on playing with the cell phone. Currently, however, the dual-card dual-standby cell phones can similarly enter one mode as well. As a result, the subscriber's need cannot be satisfied.

EP 1 601 216 A1 discloses that, with a mobile communication terminal, normal call is enabled by installing a predetermined IC card. When an IC card is installed into the terminal, verification of an identifier of the IC card and verification of personal information corresponding to the identifier are performed. If the verifications have succeeded, the mobile communication terminal is customized in accordance with the personal information. A user performs communication by using his/her personal information and accessible information in a storage unit. At the time of identifier authorization operation, notification of whether or not the authorization operation has succeeded and of the identifier is provided to a predetermined administrator.

US 2010/0009668 A1 discloses a system for customizing functions of a mobile phone, the system comprising: a storage unit; at least one processor; and one or more programs stored in the storage unit and being executable by the at least one processor, the one or more programs comprising: a receiving module to receive a customization function code input by a user via an input system of the mobile phone; a selecting module to provide menu options for the user to select an operation mode of the mobile phone if the received customization function code is the same as a customization function code stored in a storage unit of the mobile phone; a setting module to set function features of each of the menu options under the operation mode; a storing module to store the set function features of each of the menu options in the storage unit; and the setting module further to provide a prompt to the user to restart the mobile phone to enable the set function features of the mobile phone.

CN 1852523 A discloses a method includes the steps: setting up user list in user list; setting up coincidence relation between user and user's id in the said user list; when mobile user uses the mobile terminal, the method assigns use mode for the mobile terminal based on the said user list. Through validating user's id, the method controls user's access authority on mobile terminal for multiple users.

CN 101287193 A discloses a method for protecting information stored in a mobile phone when using an associated subscriber identity module (SIM) card. The method comprises a memorizer of a mobile phone stores sole identification information of a subscriber identity module card associated with the mobile phone; when the mobile phone is power-on, the sole identification information of the inserted subscriber identity module card is read; according to the read sole identification information of the inserted subscriber identity module card, the mobile phone judges whether the inserted subscriber identity module card is consistent with the sole identification information of the associated subscriber identity module card stored in the memorizer of the mobile phone or not, if not, the mobile phone conceals or encrypts the information pertaining to the associated subscriber identity module card of the mobile phone and stored in the memorizer; the mobile phone starts up a corresponding mode according to the subscriber identity module card and enters a standby mode.

CN 102098661 A discloses a mobile terminal and a method for processing information of an SIM (subscriber information module) card. The terminal comprises a reading unit, a comparing unit and a first prompting unit, wherein the reading unit is used for reading the international mobile subscriber identification (IMSI) information of the SIM card when the mobile terminal is started; the comparing unit is used for comparing the IMSI information read by the reading unit with the IMSI information of the SIM card stored at a previous time; and the first prompting unit is used for providing an SIM card update prompt and a prompt indicating whether to inform contacts in an address list of SIM update information.

Still, the prior art needs to be improved and developed.

### Summary of the Invention

In light of the above drawback of the prior art, the object of the present invention is to provide a method and a storage medium for automatically switching subscriber mode through identifying IMSI so as to solve the problem that on current cell phones, the subscriber mode cannot be automatically switched according to different subscribers.

This problem is solved according to the features of the independent claims. Further embodiments result from the depending claims.

Advantageous effects: the present invention provides a method and a storage medium for automatically switching subscriber mode through identifying IMSI. By setting IMSI of a SIM card to correspond to the subscriber mode and setting two determination processes on the newly inserted SIM card, it achieves that a cell phone can automatically enter different subscriber modes with no need to select manually when a subscriber inserts a different SIM card, and moreover, the two determination processes ensure the quick and efficient completion of the process to identify IMSI and automatically switch subscriber mode, which improves the product experience of cell phone.

The aforementioned characteristics, features and advantages of the invention as well as the way they are achieved will be further illustrated in connection with the following examples and considerations as discussed in view of the figures.
Fig. 1 is a flow chart of the method for automatically switching subscriber mode through identifying IMSI according to an embodiment of the present invention.
Fig.2 is a block diagram of the principle of the system for automatically switching subscriber mode through identifying IMSI according to an embodiment of the present invention.
Fig.3 is a flow chart of the method for automatically switching subscriber mode through identifying IMSI according to a preferred embodiment of the present invention.

The present invention provides a method and a storage medium for automatically switching subscriber mode through identifying IMSI. To make the object, technical solution and advantage of the present invention clearer and more specific, the present invention will be further described in detail below. It should be understood that the specific embodiments herein are only used to describe the present invention, rather than to limit the present invention.

Currently for a cell phone, it is the same mode to enter when any SIM card (e.g. GSM 900/1800) that meets the network standard requirements is inserted and the cell phone is turned on. IMSI, i.e. International Mobile Subscriber Identification Number, is an identifier to differentiate mobile subscribers, which is stored in SIM cards and may be used to differentiate valid information of mobile subscribers. Moreover, IMSI is unique, i.e. IMSI is bundled with the cell phone number, which is defined in a server HLR (Home Location Register) set and maintained by the service provider (e.g. China Mobile) that has the contract with the cell phone having the SIM card. One SIM card corresponds to one IMSI code and is unique. With the present invention, a mobile terminal device having multiple mobile subscriber modes enters different subscriber modes through identifying different IMSIs by the terminal, thereby achieving the use of one cell phone by multiple subscribers.

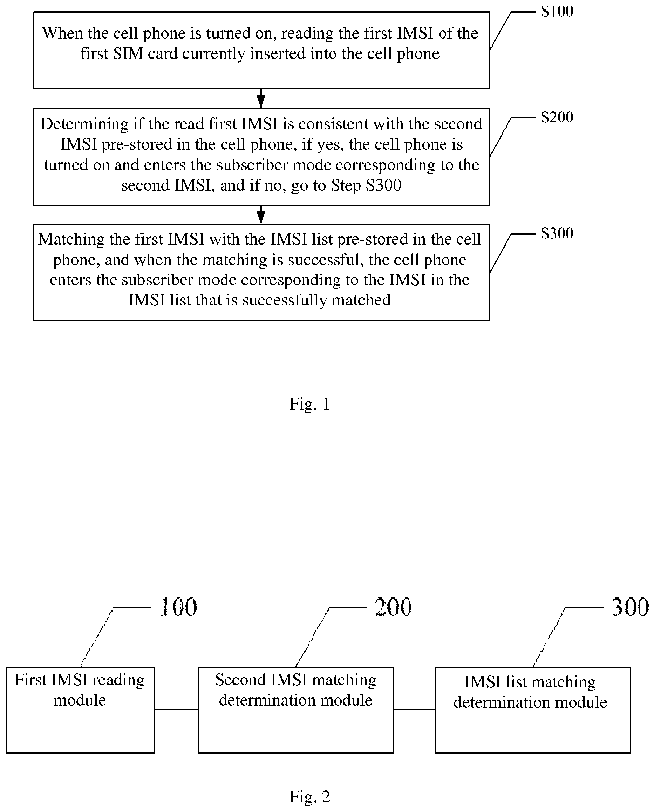

As shown in Fig. 1, the method for automatically switching subscriber mode through identifying IMSI comprises:
S100. When the cell phone is turned on, reading the first IMSI of the first SIM card currently inserted into the cell phone.

Each time when the cell phone is turned on with a SIM card inserted, the terminal obtains the EFimsi file that stores IMSI in the current SIM card through a reading action to obtain the first IMSI of the inserted SIM card.

S200. Determining if the read first IMSI corresponds to the second IMSI pre-stored in the cell phone, if yes, the cell phone is turned on and enters the subscriber mode corresponding to the second IMSI, and if no, go to Step S300;
Wherein the cell phone pre-storing the second IMSI is specifically: when the cell phone is shut down at the previous time, it automatically records the second IMSI of the second SIM card and the information of the subscriber mode that the second IMSI corresponds to, and stores the second IMSI and the information of its corresponding subscriber mode in the cell phone memory. There is a correlation between the second IMSI and its corresponding subscriber mode, and only the IMSI of the previous shutdown is stored here. For multiple changes of SIM cards, only the IMSI recorded after the last change of SIM card is stored. If the terminal is dual card, two IMSIs are stored in the memory at the previous shutdown, and the terminal will compare the IMSIs one by one. With this step, situations before and after insertion of the same SIM card into a subscriber's cell phone can be quickly determined with no need for subsequent matching process, which realizes the quick start of the cell phone's subscriber mode and facilitates subscriber operations.

S300. Matching the first IMSI with the IMSI list pre-stored in the cell phone, and when the matching is successful, the cell phone enters the subscriber mode corresponding to the IMSI in the IMSI list that is successfully matched.

Wherein the cell phone pre-storing the IMSI list is specifically: setting up an IMSI list in the cell phone, receiving IMSI inputted by a subscriber and storing it into the IMSI list, receiving the subscriber mode configuration set by the subscriber for the IMSI, storing the subscriber mode in the IMSI list and correlating to the corresponding IMSI. Furthermore, setting up a mode change menu in the cell phone for performing subscriber-defined setup on the IMSI list, and setting up login authority for the mode change menu, receiving a control code inputted by a subscriber and performing verification, and if the verification is passed, entering the settings interface of the mode change menu. In other words, a cell phone subscriber may type in the IMSI of a SIM card recognized by the subscriber in advance on his own. For example, a subscriber types in the IMSI of his family member's SIM card into the mode change menu and stores in the IMSI list. In such a way, it ensures that when the family member inserts his own SIM card in the subscriber's cell phone, it can pass the verification by the cell phone and normally use the cell phone.

In a preferred embodiment, the IMSI list is shown in Table 1, in which the correspondence between each IMSI and different subscriber modes is set up. For example, IMSI 1 in Table 1 corresponds and is correlated to the subscriber mode of basic functions + communication functions. A subscriber may make audio calls, video calls, send text messages, and send multimedia messages under this mode. When this cell phone is used by a young person, on the other hand, the mode corresponding to IMSI 3 of the young person's SIM card is basic functions + entertainment functions, i.e. the subscriber may play all kinds of games, open up a player to listen to music, and refresh Weibo online, etc. in this mode. If this is a student, the parents may set up the mode that corresponds to IMSI 2 of his SIM card to be basic functions + study functions. Under this mode, the student may use dictionaries, e-books or other study applications that the subscriber has installed manually, but cannot open up applications with entertainment functions such as Weibo and games.

**Table 1 Correspondence between IMSI in the IMSI list and subscriber modes**

| IMSI | Subscriber mode |
|---|---|
| IMSI 1 | basic functions + communication functions (making audio calls, video calls, sending text messages, and sending multimedia message) |
| IMSI 2 | basic functions + study functions (e.g. dictionaries, e-books or other study applications that the subscriber has installed manually) |
| IMSI 3 | basic functions + entertainment functions (various developmental games, digital games, etc.) |
| IMSI 4 | all functions |
| IMSI codes defined by subscribers | other modes |
| other IMSI codes that are not self-defined | regular modes (limited functions) |

When the matching between the first IMSI and the IMSI list pre-stored in the cell phone is not successful, the cell phone enters the control code input interface of the mode change menu, receives a control code inputted by the subscriber and performs verification, if the verification is passed, enters the settings interface of the mode change menu to add the first IMSI to the IMSI list, and receives and stores the subscriber mode set by the subscriber corresponding to the first IMSI.

There are two pathways for a cell phone to receive new IMSI. One, as described above, the cell phone subscriber enters the mode change menu in advance to input and save the IMSI to a new SIM card, so as to ensure that said SIM card can pass verification after being inserted into the cell phone. Two, when a new SIM card is inserted into the cell phone, after the matching between the IMSI and the pre-stored IMSI list is not successful, the cell phone automatically switches to the login interface of the mode change menu, if the subscriber inputs a correct control code and the verification is successful, the cell phone concludes that the new IMSI is permitted for use by the cell phone subscriber, the cell phone will automatically add the new IMSI to the IMSI list and enter the subscriber mode editing mode, which allows the subscriber to set up the subscriber mode that the new IMSI is to correspond and correlate to. When the subscriber completes the setup, the cell phone receives the setup information and stores it in the IMSI list.

Preferably, the cell phone enters the set subscriber mode corresponding to the first IMSI when the first IMSI is added to the IMSI list, and the subscriber mode set by the subscriber corresponding to the first IMSI is received and stored. Namely, when the saving of the new IMSI and its corresponding subscriber mode is completed, the cell phone automatically enters the subscriber mode corresponding to the new IMSI, which is convenient for the subscriber, and there is no need for manual switch after exiting the mode change menu.

In the preferred embodiment, the cell phone enters a regular mode that only has the function to make emergency calls when the matching between the first IMSI and the IMSI list pre-stored in the cell phone is not successful, and the received control code that is inputted by the subscriber fails verification. In the circumstance that both verifications are passed, it can be confirmed that the subscriber is not the cell phone subscriber himself. To protect the cell phone owner's privacy and to prevent the cell phone information from being stolen, therefore, the cell phone automatically switches to the regular mode in which the cell phone only has the function to make emergency calls. It makes sure that the subscriber can only use the cell phone to make calls, but cannot look up the information stored on the cell phone.

The control code verification information is stored in the mode change menu and the data information of the mode change menu is stored in the cell phone memory. The data information of the mode change menu may be stored in the same storage space of the cell phone memory with the second IMSI and the corresponding subscriber mode information.

A system for automatically switching subscriber mode through identifying IMSI that uses the above method for automatically switching subscriber mode through identifying IMSI, as shown in Fig.2, wherein the system for automatically switching subscriber mode through identifying IMSI comprises:
A first IMSI reading module 100 for reading the first IMSI of the first SIM card currently inserted into the cell phone;
A second IMSI matching determination module 200 for determining if the read first IMSI is consistent with the second IMSI pre-stored in the cell phone, and carrying out predetermined operations according to the determination result;
An IMSI list matching determination module 300 for matching the first IMSI with the IMSI list pre-stored in the cell phone, and when the matching is successful, the cell phone enters the subscriber mode corresponding to the IMSI in the IMSI list that is successfully matched.

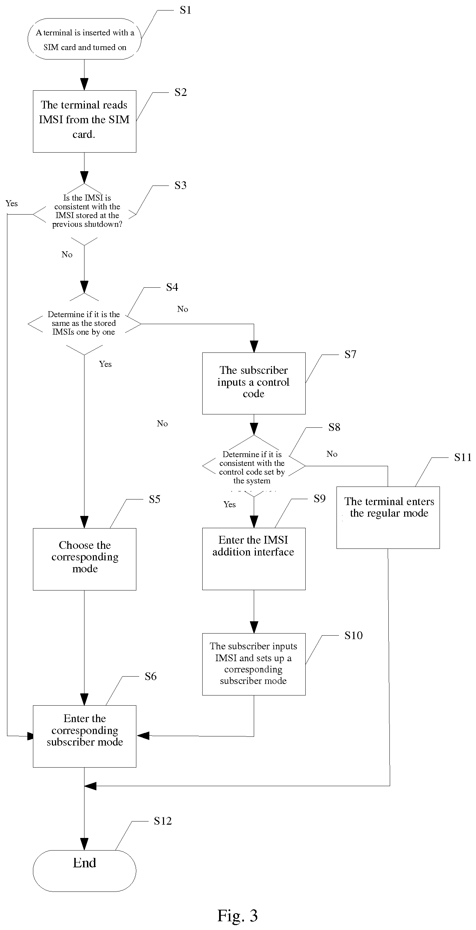

Fig.3 is a flow chart of the method for automatically switching subscriber mode through identifying IMSI according to a preferred embodiment of the present invention.

S 1, a SIM card is inserted into a terminal. The cell phone starts initialization.

S2, the terminal reads IMSI from the SIM card. The cell phone terminal reads from the SIM card the EFimsi filed stored therein, and consequently obtains IMSI.

S3, if the IMSI corresponds to the IMSI stored at the previous shutdown. The cell phone terminal calls the IMSI stored at the previous shutdown, i.e. the IMSI in the SIM card of the cell phone at the previous shutdown, and compares it with the obtained IMSI, if they are the same, go to Step S6 and enter a corresponding subscriber mode. Namely, the cell phone enters the same subscriber mode as the previous shutdown, when the cell phone stores the IMSI at the previous shutdown, it also records the correlated subscriber mode. When verifying if the IMSI of the current SIM card corresponds to the previous IMSI, it just needs to directly enter the subscriber mode at the previous shutdown. Subsequently, go to Step S12 and end.

If the IMSI in the SIM card of the cell phone at the previous shutdown does not correspond to the obtained IMSI in the comparison, go to Step S4, and determine if it is the same as the stored IMSIs one by one. The cell phone will then enter the second matching to
match with IMSIs in the IMSI list pre-stored in the cell phone, if the matching is successful, go to Step S5, and choose the corresponding mode. The successful matching with an IMSI in the IMSI list shows that the obtained IMSI is a SIM card used by the cell phone before or confirmed by the cell phone subscriber in advance. Therefore, it directly enters the mode change menu, the subscriber may perform subscriber-defined setup to set up a subscriber mode for the obtained IMSI. Since the obtained IMSI has existed in the IMSI list, the subscriber may also choose the subscriber mode that the obtained IMSI corresponds to in default. When the subscriber confirms the corresponding mode, go to Step S6 to enter the corresponding subscriber mode, subsequently go to Step S12 and end.

If the matching between the obtained IMSI and IMSIs in the IMSI list pre-stored in the cell phone is not successful, go to Step S7, and the subscriber inputs a control code. And Step S8 for determining if it is consistent with the control code set by the system. In the circumstance that matching is not successful in both times, the cell phone concludes that the SIM card is a new card to be used by the terminal subscriber or the SIM card is a new card used by another subscriber, and it has never been used on the terminal previously. In such a circumstance, the terminal provides a subscriber authentication input interface to the subscriber control code input interface for determining if the subscriber is the terminal subscriber himself. When the control code inputted by the subscriber is consistent with the control code set by the terminal (preferably this control code may be obtained through a legal route, e.g. when the device is purchased), go to Step S9 and enter the IMSI addition interface. Namely, the terminal enters the mode change menu. Subsequently go to Step S10, the subscriber inputs IMSI and sets up a corresponding subscriber mode. On the subscriber-defined IMSI interface, the subscriber adds the IMSI code of the current SIM card and sets up a corresponding mode. When it is completed, go to Step S6 and the terminal directly enters the mode stored by the subscriber. When the control code inputted by the subscriber is not consistent with the control code set by the terminal, go to Step S11 and the terminal enters the regular mode. Under the regular mode, the cell phone has limited functions, the subscriber of the newly inserted SIM card can only make emergency calls, and subsequently the flow ends.

The system for automatically switching subscriber mode through identifying IMSI is embodied on a terminal, said terminal being, for example, a computer, a tablet, a cell phone, etc., and the system for automatically switching subscriber mode through identifying IMSI belongs to the same concept of the method for automatically switching subscriber mode through identifying IMSI in the embodiment above, any method provided in the embodiment of methods for automatically switching subscriber mode through identifying IMSI may be run on the system for automatically switching subscriber mode through identifying IMSI. See the embodiment of the method for automatically switching subscriber mode through identifying IMSI for the detailed implementation process, which will not be repeated herein.

It should be noted that with respect to the method for automatically switching subscriber mode through identifying IMSI according to the embodiment of the present invention, those skilled in the art may understand that all or a part of the flow of the method for automatically switching subscriber mode through identifying IMSI according to the embodiment of the present invention may be completed by a computer program through controlling relevant hardware, said computer program may be stored in a computer readable memory medium, for example, stored in the terminal's memory, and be executed by at least one processor in the terminal, and the execution process may include, for example, flows in the embodiment of all of the above methods, wherein the memory medium may be a disk, a CD, a ROM or a RAM.

With respect to the system for automatically switching subscriber mode through identifying IMSI, all function modules thereof may be integrated in a processing chip, or all function modules may have independent physical presence, or two or more modules are integrated in a module. The above integrated module may either be embodied in the form of hardware or be embodied in the form of a software function module. If the integrated module is embodied in the form of a software function module and sold or used as an independent product, it may also be stored in a computer readable memory medium, said memory medium being, for example, a ROM, a disk or a CD.

With respect to the method and the storage medium for automatically switching subscriber mode through identifying IMSI according to the present invention, by setting IMSI of a SIM card to correspond to the subscriber mode and setting two determination processes on the newly inserted SIM card, they achieve that a cell phone can automatically enter different subscriber modes with no need to select manually when a subscriber inserts a different SIM card, and moreover, the two determination processes ensure the quick and efficient completion of the process to identify IMSI and automatically switch subscriber mode, which improves the product experience of cell phone.

It should be understood that applications of the present invention are not limited to the above examples. To those skilled in the art, improvements or modifications may be made according to the above description, and all of these improvements or modifications are defined by the appended claims of the present invention.

## Claims

1. A method for switching subscriber modes through identifying an International Mobile Subscriber Identification Number, IMSI, wherein the method comprises:
- when the cell phone is turned on, reading, by the cell phone, a first IMSI of a first SIM card inserted into the cell phone (S100; S1-S2);
- determining, by the cell phone, if the read first IMSI corresponds to a second IMSI pre-stored in the cell phone at the previous shutdown of the cell phone (S200; S3);
- if the read first IMSI corresponds to the second IMSI, entering, by the cell phone, a subscriber mode corresponding to the second IMSI (S200; S6);
- if the read first IMSI does not correspond to the second IMSI, then the first IMSI is matched, by the cell phone, with an IMSI list pre-stored in the cell phone (S300; S4); and
- when the matching is successful, entering, by the cell phone, the subscriber mode corresponding to the IMSI in the IMSI list that is successfully matched (S300; S6),
wherein the IMSI list pre-stored in the cell phone has been created prior to the step when the cell phone is turned on by:
- setting up an IMSI list in the cell phone, receiving IMSI input by a subscriber and storing it into the IMSI list, receiving the subscriber mode configuration set by the subscriber for the IMSI, storing the subscriber mode in the IMSI list and correlating to the corresponding IMSI (S300); the method **characterized in that**:
the second IMSI has been pre-stored in the cell phone by:
- when the cell phone is shut down at the previous time, recording, by the cell phone during shut down, the IMSI of the SIM card being inserted into the cell phone and the information of its corresponding subscriber mode, and storing this IMSI as the second IMSI and the information of its corresponding subscriber mode in a cell phone memory (S200).

2. The method according to claim 1, **characterized by**:
- setting up a mode change menu in the cell phone for performing subscriber-defined setup on the IMSI list, and setting up login authority for the mode change menu (S300);
- receiving a control code input by a subscriber and performing control code verification (S7, S8); and
- if the control code verification is passed, entering a settings interface of the mode change menu (S9).

3. The method according to claim 2, **characterized by**:
- when the matching between the first IMSI and the IMSI list pre-stored in the cell phone is not successful, entering by the cell phone a control code input interface of a mode change menu; (S7)
- receiving a control code input by a subscriber and performing control code verification (S7, S8); and
- if the control code verification is passed, entering the settings interface of the mode change menu (S9) to add the first IMSI to the IMSI list (S10), and receiving and storing the subscriber mode set by the subscriber corresponding to the first IMSI (S6).

4. The method according to claims 2 or 3, **characterized in that** the cell phone enters the set subscriber mode corresponding to the first IMSI when the first IMSI is added to the IMSI list (S10), and the subscriber mode set by the subscriber corresponding to the first IMSI is received and stored (S6).

5. The method according to any of the claims 2 to 4, **characterized in that** the cell phone enters a mode that only has the function to make emergency calls when the matching between the first IMSI and the IMSI list pre-stored in the cell phone is not successful, and the received control code that is input by the subscriber fails control code verification (S11).

6. The method according to any of the claims 2 to 5, **characterized in that** a control code verification information is stored in a mode change menu and the data information of the mode change menu is stored in the cell phone memory.

7. A storage medium, which stores processor executable commands which, when executed by a processor, let the processor complete the following operations:
- when the cell phone is turned on, reading a first International Mobile Subscriber Identification Number, IMSI, of a first SIM card inserted into the cell phone (S 100);
- determining if the read first IMSI corresponds to a second IMSI pre-stored in the cell phone at a previous shutdown of the cell phone;
- if the read first IMSI corresponds to the second IMSI at the previous shutdown, entering by the cell phone a subscriber mode corresponding to the second IMSI (S200);
- if the read first IMSI does not correspond to the second IMSI (S3), then the first IMSI is matched with an IMSI list pre-stored in the cell phone (S4); and
- when the matching is successful, entering, by the cell phone the subscriber mode corresponding to the IMSI in the IMSI list that is successfully matched (S300),
wherein the step that the cell phone pre-stores the IMSI list comprises:
- setting up an IMSI list in the cell phone, receiving IMSI input by a subscriber and storing it into the IMSI list, receiving the subscriber mode configuration set by the subscriber for the IMSI, storing the subscriber mode in the IMSI list and correlating to the corresponding IMSI (S300); the storage medium **characterized in that**:
pre-storing the second IMSI comprises:
- when the cell phone is shut down at the previous time, recording, by the cell phone during shut down, the IMSI of the SIM card being inserted into the cell phone during shut down and the information of its corresponding subscriber mode, and storing this IMSI as the second IMSI and the information of its corresponding subscriber mode in the cell phone memory (S200).

8. The storage medium according to claim 7, **characterized by**:
- setting up a mode change menu in the cell phone for performing subscriber-defined setup on the IMSI list, and setting up login authority for the mode change menu;
- receiving a control code input by a subscriber and performing control code verification; and
- if the control code verification is passed, entering the settings interface of the mode change menu.

9. The storage medium according to claims 7 or 8, **characterized by**:
- when the matching between the first IMSI and the IMSI list pre-stored in the cell phone is not successful, entering by the cell phone a control code input interface of the mode change menu (S7);
- receiving a control code input by a subscriber and performing control code verification (S7, S8); and
- if the control code verification is passed, entering a settings interface of the mode change menu (S9) to add the first IMSI to the IMSI list, and receiving and storing the subscriber mode set by the subscriber corresponding to the first IMSI (S6).

## Patentansprüche

1. Ein Verfahren zum Umschalten von Teilnehmermodi durch das Identifizieren einer internationalen Mobilfunk-Teilnehmeridentifikationsnummer, IMSI, wobei das Verfahren Folgendes beinhaltet:
- wenn das Mobiltelefon eingeschaltet wird, Lesen, durch das Mobiltelefon, einer ersten IMSI einer ersten SIM-Karte, die in das Mobiltelefon eingelegt ist (S100; S1-S2);
- Bestimmen, durch das Mobiltelefon, ob die gelesene erste IMSI einer beim vorherigen Ausschalten des Mobiltelefons vorab in dem Mobiltelefon gespeicherten zweiten IMSI entspricht (S200; S3);
- falls die gelesene erste IMSI der zweiten IMSI entspricht, Eintreten, durch das Mobiltelefon, in einen Teilnehmermodus, welcher der zweiten IMSI entspricht (S200; S6);
- falls die gelesene erste IMSI der zweiten IMSI nicht entspricht, dann wird die erste IMSI durch das Mobiltelefon mit einer vorab in dem Mobiltelefon gespeicherten IMSI-Liste abgeglichen (S300; S4); und
- wenn das Abgleichen erfolgreich ist, Eintreten, durch das Mobiltelefon, in den Teilnehmermodus, welcher der erfolgreich abgeglichenen IMSI in der IMSI-Liste entspricht (S300; S6),
wobei die vorab in dem Mobiltelefon gespeicherte IMSI-Liste vor dem Schritt des Einschaltens des Mobiltelefons durch Folgendes erzeugt wurde:
- Einrichten einer IMSI-Liste in dem Mobiltelefon, Empfangen einer durch einen Teilnehmer eingegebenen IMSI und Speichern dieser in der IMSI-Liste, Empfangen der durch den Teilnehmer für die IMSI eingestellten Teilnehmermoduskonfiguration, Speichern des Teilnehmermodus in der IMSI-Liste und Korrelieren mit der entsprechenden IMSI (S300);
wobei das Verfahren **dadurch gekennzeichnet ist, dass**
die zweite IMSI durch Folgendes vorab in dem Mobiltelefon gespeichert wurde:
- wenn das Mobiltelefon zu dem vorherigen Zeitpunkt ausgeschaltet wird, Aufzeichnen, durch das Mobiltelefon während des Ausschaltens, der IMSI der in das Mobiltelefon eingelegten SIM-Karte und der Informationen ihres entsprechenden Teilnehmermodus und Speichern dieser IMSI als die zweite IMSI und der Informationen ihres entsprechenden Teilnehmermodus in einem Mobiltelefonspeicher (S200).

2. Verfahren gemäß Anspruch 1, **gekennzeichnet durch** Folgendes:
- Einrichten eines Moduswechselmenüs in dem Mobiltelefon zum Durchführen einer teilnehmerdefinierten Einrichtung auf der IMSI-Liste und Einrichten einer Anmeldeberechtigung für das Moduswechselmenü (S300);
- Empfangen eines durch einen Teilnehmer eingegebenen Steuercodes und Durchführen einer Steuercodeverifizierung (S7, S8); und
- falls die Steuercodeverifizierung bestanden wird, Eintreten in eine Einstellungsschnittstelle des Moduswechselmenüs (S9).

3. Verfahren gemäß Anspruch 2, **gekennzeichnet durch** Folgendes:
- wenn das Abgleichen zwischen der ersten IMSI und der vorab in dem Mobiltelefon gespeicherten IMSI-Liste nicht erfolgreich ist, Eintreten, durch das Mobiltelefon, in eine Steuercodeeingabeschnittstelle eines Moduswechselmenüs (S7);
- Empfangen eines durch einen Teilnehmer eingegebenen Steuercodes und Durchführen einer Steuercodeverifizierung (S7, S8); und
- falls die Steuercodeverifizierung bestanden wird, Eintreten in die Einstellungsschnittstelle des Moduswechselmenüs (S9) zum Hinzufügen der ersten IMSI zu der IMSI-Liste (S10) und Empfangen und Speichern des durch den Teilnehmer eingestellten Teilnehmermodus, welcher der ersten IMSI entspricht (S6).

4. Verfahren gemäß den Ansprüchen 2 oder 3, **dadurch gekennzeichnet, dass** das Mobiltelefon in den eingestellten Teilnehmermodus, welcher der ersten IMSI entspricht, eintritt, wenn die erste IMSI zu der IMSI-Liste hinzugefügt wird (S10) und der durch den Teilnehmer eingestellte Teilnehmermodus, welcher der ersten IMSI entspricht, empfangen und gespeichert wird (S6).

5. Verfahren gemäß einem der Ansprüche 2 bis 4, **dadurch gekennzeichnet, dass** das Mobiltelefon in einen Modus eintritt, der nur die Funktion zum Tätigen von Notrufen aufweist, wenn das Abgleichen zwischen der ersten IMSI und der vorab in dem Mobiltelefon gespeicherten IMSI-Liste nicht erfolgreich ist und der empfangene Steuercode, der durch den Teilnehmer eingegeben wird, die Steuercodeverifizierung nicht besteht (S11).

6. Verfahren gemäß einem der Ansprüche 2 bis 5, **dadurch gekennzeichnet, dass** Steuercodeverifizierungsinformationen in einem Moduswechselmenü gespeichert werden und die Dateninformationen des Moduswechselmenüs in dem Mobiltelefonspeicher gespeichert werden.

7. Ein Speichermedium, auf dem prozessorausführbare Befehle gespeichert sind, die bei Ausführung durch einen Prozessor den Prozessor die folgenden Operationen abschließen lassen:
- wenn das Mobiltelefon eingeschaltet wird, Lesen einer ersten internationalen Mobilfunk-Teilnehmeridentifikationsnummer, IMSI, einer ersten SIM-Karte, die in das Mobiltelefon eingelegt ist (S100);
- Bestimmen, ob die gelesene erste IMSI einer bei einem vorherigen Ausschalten des Mobiltelefons vorab in dem Mobiltelefon gespeicherten zweiten IMSI entspricht;
- falls die gelesene erste IMSI der zweiten IMSI bei dem vorherigen Ausschalten entspricht, Eintreten, durch das Mobiltelefon, in einen Teilnehmermodus, welcher der zweiten IMSI entspricht (S200);
- falls die gelesene erste IMSI der zweiten IMSI nicht entspricht (S3), dann wird die erste IMSI mit einer vorab in dem Mobiltelefon gespeicherten IMSI-Liste abgeglichen (S4); und
- wenn das Abgleichen erfolgreich ist, Eintreten, durch das Mobiltelefon, in den Teilnehmermodus, welcher der erfolgreich abgeglichenen IMSI in der IMSI-Liste entspricht (S300),
wobei der Schritt des Vorabspeicherns der IMSI-Liste durch das Mobiltelefon Folgendes beinhaltet:
- Einrichten einer IMSI-Liste in dem Mobiltelefon, Empfangen einer durch einen Teilnehmer eingegebenen IMSI und Speichern dieser in der IMSI-Liste, Empfangen der durch den Teilnehmer für die IMSI eingestellten Teilnehmermoduskonfiguration, Speichern des Teilnehmermodus in der IMSI-Liste und Korrelieren mit der entsprechenden IMSI (S300);
wobei das Speichermedium **dadurch gekennzeichnet ist, dass**
das Vorabspeichern der zweiten IMSI Folgendes beinhaltet:
- wenn das Mobiltelefon zu dem vorherigen Zeitpunkt ausgeschaltet wird, Aufzeichnen, durch das Mobiltelefon während des Ausschaltens, der IMSI der während des Ausschaltens in das Mobiltelefon eingelegten SIM-Karte und der Informationen ihres entsprechenden Teilnehmermodus und Speichern dieser IMSI als die zweite IMSI und der Informationen ihres entsprechenden Teilnehmermodus in dem Mobiltelefonspeicher (S200).

8. Speichermedium gemäß Anspruch 7, **gekennzeichnet durch** Folgendes:
- Einrichten eines Moduswechselmenüs in dem Mobiltelefon zum Durchführen einer teilnehmerdefinierten Einrichtung auf der IMSI-Liste und Einrichten einer Anmeldeberechtigung für das Moduswechselmenü;
- Empfangen eines durch einen Teilnehmer eingegebenen Steuercodes und Durchführen einer Steuercodeverifizierung; und
- falls die Steuercodeverifizierung bestanden wird, Eintreten in die Einstellungsschnittstelle des Moduswechselmenüs.

9. Speichermedium gemäß den Ansprüchen 7 oder 8, **gekennzeichnet durch** Folgendes:
- wenn das Abgleichen zwischen der ersten IMSI und der vorab in dem Mobiltelefon gespeicherten IMSI-Liste nicht erfolgreich ist, Eintreten, durch das Mobiltelefon, in eine Steuercodeeingabeschnittstelle des Moduswechselmenüs (S7);
- Empfangen eines durch einen Teilnehmer eingegebenen Steuercodes und Durchführen einer Steuercodeverifizierung (S7, S8); und
- falls die Steuercodeverifizierung bestanden wird, Eintreten in eine Einstellungsschnittstelle des Moduswechselmenüs (S9) zum Hinzufügen der ersten IMSI zu der IMSI-Liste und Empfangen und Speichern des durch den Teilnehmer eingestellten Teilnehmermodus, welcher der ersten IMSI entspricht (S6).

## Revendications

1. Un procédé pour commuter de modes abonné par le biais de l'identification d'un numéro IMSI (*International Mobile Subscriber Identification,* identification internationale d'abonné mobile), le procédé comprenant le fait :
- lorsque le téléphone cellulaire est allumé, de lire, par le téléphone cellulaire, un premier IMSI d'une première carte SIM insérée dans le téléphone cellulaire (S100 ; S1-S2) ;
- de déterminer, par le téléphone cellulaire, si le premier IMSI lu correspond à un deuxième IMSI pré-stocké dans le téléphone cellulaire à la précédente mise à l'arrêt du téléphone cellulaire (S200 ; S3) ;
- si le premier IMSI lu correspond au deuxième IMSI, de passer, par le téléphone cellulaire, dans un mode abonné correspondant au deuxième IMSI (S200 ; S6) ;
- si le premier IMSI lu ne correspond pas au deuxième IMSI, alors de mettre en concordance, par le téléphone cellulaire, le premier IMSI avec une liste d'IMSI pré-stockée dans le téléphone cellulaire (S300 ; S4) ; et
- lorsqu'il en ressort un match, de passer, par le téléphone cellulaire, dans le mode abonné correspondant au IMSI dans la liste d'IMSI qui est ressorti comme un match (S300 ; S6),
dans lequel la liste d'IMSI pré-stockée dans le téléphone cellulaire a été créée préalablement à l'étape où le téléphone cellulaire est allumé par le fait :
- de paramétrer une liste d'IMSI dans le téléphone cellulaire, de recevoir un IMSI entré par un abonné et de le stocker dans la liste d'IMSI, de recevoir la configuration de mode abonné établie par l'abonné pour l'IMSI, de stocker le mode abonné dans la liste d'IMSI et d'effectuer une corrélation à l'IMSI correspondant (S300) ;
le procédé étant **caractérisé en ce que** :
le deuxième IMSI a été pré-stocké dans le téléphone cellulaire par le fait
- lorsque le téléphone cellulaire est mis à l'arrêt la fois précédente, d'enregistrer, par le téléphone cellulaire durant la mise à l'arrêt, l'IMSI de la carte SIM qui est insérée dans le téléphone cellulaire et les informations de son mode abonné correspondant, et de stocker cet IMSI en tant que deuxième IMSI et les informations de son mode abonné correspondant dans une mémoire de téléphone cellulaire (S200).

2. Le procédé selon la revendication 1, **caractérisé par** le fait :
- de paramétrer un menu de changement de mode dans le téléphone cellulaire pour réaliser un paramétrage défini par l'abonné sur la liste d'IMSI, et de paramétrer une autorité de connexion pour le menu de changement de mode (S300) ;
- de recevoir un code de commande entré par un abonné et de réaliser une vérification de code de commande (S7, S8) ; et
- si la vérification de code de commande est concluante, de passer dans une interface de paramètres du menu de changement de mode (S9).

3. Le procédé selon la revendication 2, **caractérisé par** le fait :
- lorsqu'il ne ressort pas de match entre le premier IMSI et la liste d'IMSI pré-stockée dans le téléphone cellulaire, de passer, par le téléphone cellulaire, dans une interface d'entrée de code de commande d'un menu de changement de mode (S7) ;
- de recevoir un code de commande entré par un abonné et de réaliser une vérification de code de commande (S7, S8) ; et
- si la vérification de code de commande est concluante, de passer dans l'interface de paramètres du menu de changement de mode (S9) pour ajouter le premier IMSI à la liste d'IMSI (S10), et de recevoir et stocker le mode abonné établi par l'abonné correspondant au premier IMSI (S6).

4. Le procédé selon les revendications 2 ou 3, **caractérisé en ce que** le téléphone cellulaire passe dans le mode abonné établi correspondant au premier IMSI lorsque le premier IMSI est ajouté à la liste d'IMSI (S10), et que le mode abonné établi par l'abonné correspondant au premier IMSI est reçu et stocké (S6).

5. Le procédé selon n'importe lesquelles des revendications 2 à 4, **caractérisé en ce que** le téléphone cellulaire passe dans un mode qui ne dispose que de la fonction de passer des appels d'urgence lorsqu'il ne ressort pas de match entre le premier IMSI et la liste d'IMSI pré-stockée dans le téléphone cellulaire, et que le code de commande reçu qui est entré par l'abonné est recalé lors de la vérification de code de commande (S11).

6. Le procédé selon n'importe lesquelles des revendications 2 à 5, **caractérisé en ce qu'**une information de vérification de code de commande est stockée dans un menu de changement de mode et les informations de données du menu de changement de mode sont stockées dans la mémoire de téléphone cellulaire.

7. Un support de stockage, lequel stocke des instructions exécutables par processeur qui, lorsqu'elles sont exécutées par un processeur, laissent le processeur mener à bien les opérations suivantes :
- lorsque le téléphone cellulaire est allumé, lire un premier numéro IMSI (*International Mobile Subscriber Identification*) d'une première carte SIM insérée dans le téléphone cellulaire (S100) ;
- déterminer si le premier IMSI lu correspond à un deuxième IMSI pré-stocké dans le téléphone cellulaire à une précédente mise à l'arrêt du téléphone cellulaire ;
- si le premier IMSI lu correspond au deuxième IMSI à la précédente mise à l'arrêt, passer, par le téléphone cellulaire, dans un mode abonné correspondant au deuxième IMSI (S200) ;
- si le premier IMSI lu ne correspond pas au deuxième IMSI (S3), alors mettre en concordance le premier IMSI avec une liste d'IMSI pré-stockée dans le téléphone cellulaire (S4) ; et
- lorsqu'il en ressort un match, passer, par le téléphone cellulaire, dans le mode abonné correspondant au IMSI dans la liste d'IMSI qui est ressorti comme un match (S300),
dans lequel l'étape où le téléphone cellulaire pré-stocke la liste d'IMSI comprend le fait :
- de paramétrer une liste d'IMSI dans le téléphone cellulaire, de recevoir un IMSI entré par un abonné et de le stocker dans la liste d'IMSI, de recevoir la configuration de mode abonné établie par l'abonné pour l'IMSI, de stocker le mode abonné dans la liste d'IMSI et d'effectuer une corrélation à l'IMSI correspondant (S300) ;
le support de stockage étant **caractérisé en ce que** :
le fait de pré-stocker le deuxième IMSI comprend le fait :
- lorsque le téléphone cellulaire est mis à l'arrêt la fois précédente, d'enregistrer, par le téléphone cellulaire durant la mise à l'arrêt, l'IMSI de la carte SIM qui est insérée dans le téléphone cellulaire durant la mise à l'arrêt et les informations de son mode abonné correspondant, et de stocker cet IMSI en tant que deuxième IMSI et les informations de son mode abonné correspondant dans la mémoire de téléphone cellulaire (S200).

8. Le support de stockage selon la revendication 7, **caractérisé par** le fait :
- de paramétrer un menu de changement de mode dans le téléphone cellulaire pour réaliser un paramétrage défini par l'abonné sur la liste d'IMSI, et de paramétrer une autorité de connexion pour le menu de changement de mode ;
- de recevoir un code de commande entré par un abonné et de réaliser une vérification de code de commande ; et
- si la vérification de code de commande est concluante, de passer dans l'interface de paramètres du menu de changement de mode.

9. Le support de stockage selon les revendications 7 ou 8, **caractérisé par** le fait :
- lorsqu'il ne ressort pas de match entre le premier IMSI et la liste d'IMSI pré-stockée dans le téléphone cellulaire, de passer, par le téléphone cellulaire, dans une interface d'entrée de code de commande du menu de changement de mode (S7) ;
- de recevoir un code de commande entré par un abonné et de réaliser une vérification de code de commande (S7, S8) ; et
- si la vérification de code de commande est concluante, de passer dans une interface de paramètres du menu de changement de mode (S9) pour ajouter le premier IMSI à la liste d'IMSI, et de recevoir et stocker le mode abonné établi par l'abonné correspondant au premier IMSI (S6).
